# EUROPEAN PATENT APPLICATION

(11) **EP 4 657 629 A1**
(43) Date of publication of application: **03.12.2025**
(21) Application number: 24898293.6
(22) Date of filing: 13.11.2024
(51) Int. Cl.: H01M 50/24, H01M 10/04, H01M 50/383, H01M 50/375, H01M 50/211

(54) **BATTERY MODULE AND BATTERY PACK INCLUDING SAME**

(30) Priority: 28.11.2023 KR 20230168581
(71) Applicant: LG Energy Solution, Ltd., Seoul 07335 (KR)
(72) Inventor: PARK, Jinsoo, Daejeon 34122 (KR); CHA, Hun, Daejeon 34122 (KR); NA, Jongseung, Daejeon 34122 (KR); KIM, Sangwoo, Daejeon 34122 (KR); LEE, So Jeong, Daejeon 34122 (KR)
(74) Representative: Plasseraud IP
(86) International application number: PCT/KR2024/096531
(87) International publication number: WO 2025/116701

(57) **Abstract**

A battery module according to an embodiment includes: a battery cell assembly comprising a plurality of battery cells; a module frame that accommodates the battery cell assembly, and includes a bottom portion; and a phase change material layer in a lower portion of the battery cell assembly, wherein the phase change material layer is configured to melt and erase in a portion corresponding to a battery cell in which a high temperature phenomenon occurs among the plurality of battery cells, and the bottom portion of the battery cell is configured to open where the phase change material layer is erased, causing the battery cell in which the high temperature phenomenon occurs to be discharged to outside of the module frame.

## Description

### [Technical Field]

### CROSS-REFERENCE TO RELATED APPLICATION(S)

This application claims priority to and the benefit of Korean Patent Application No. 10-2023-0168581filed in the Korean Intellectual Property Office on November 28, 2023, the entire contents of which are incorporated herein by reference.

The present invention relates to a battery module and a battery pack including the same, and more specifically, it relates to a battery module which can effectively deal with a rise in temperature in one battery cell within the battery module, and a battery pack including the same.

### [Background Art]

In modern society, as the use of a portable device such as a mobile phone, a laptop, a camcorder, and a digital camera has become commonplace, the development of technologies related to the mobile device is becoming active. In addition, a rechargeable battery that is capable of being repeatedly charged and discharged is being used as a power source for an electric vehicle (EV), a hybrid electric vehicle (HEV), a plug-in hybrid electric vehicle (P-HEV), and the like as a solution to an air pollution problem caused by existing gasoline vehicles that use fossil fuel, and the need for development of a rechargeable battery is increasing.

A currently commercially available rechargeable battery includes a nickel cadmium battery, a nickel hydrogen battery, a nickel zinc battery, and a lithium rechargeable battery. Among these, the lithium rechargeable battery is receiving attention due to its merits of being free from memory effect compared to the nickel-based rechargeable battery, being able to be charged and discharged freely, having a very low self-discharge rate, and having high energy density.

Such a lithium rechargeable battery mainly uses lithium-based oxide and a carbon material as a positive electrode active material and a negative electrode active material, respectively. The lithium rechargeable battery includes an electrode assembly in which a positive electrode plate and a negative electrode plate, each of which is coated with a positive electrode active material and a negative electrode active material, are disposed with a separator therebetween, and a battery case that seals and accommodates the electrode assembly together with an electrolyte.

In general, a lithium rechargeable battery can be classified into a can-type rechargeable battery in which an electrode assembly is embedded into a metal can and a pouch-type rechargeable battery in which an electrode assembly is embedded into a pouch made of an aluminum laminate sheet, depending on shapes of an outer packaging material.

Recently, a rechargeable battery is widely used not only in a small device such as a portable electronic device, but also in a medium and large-sized device such as a vehicle and an electric power storage device. For applications in the medium and large-sized device, a large number of rechargeable batteries can be electrically connected to increase capacity and output. In this case, a pouch-type rechargeable battery is becoming more widely used due to its merits such as easy stacking and light weight.

In the case of a rechargeable battery used in a small device, two or three battery cells are arranged, but in the case of a rechargeable battery used in a medium to large device such as a vehicle, a battery module with a plurality of electrically connected battery cells is used. Such a battery module improves capacity and output by forming a battery cell assembly with a plurality of battery cells connected in series or coupled in parallel. In addition, one or more battery modules can be mounted together with various control and protection systems such as a battery disconnect unit (BDU), a battery management system(BMS), and a cooling system to form a battery pack.

As described above, in the case of a battery module and a battery pack formed by densely packing a plurality of battery cells, they may be vulnerable to fire. For example, when an abnormally high temperature occurs in one battery cell and ignites, the heat can easily spread to adjacent battery cells, causing a larger fire. Therefore, although a fire breaks out in some battery cells, the fire can spread beyond the battery module or battery pack to the entire region, including a battery rack or an electric power storage device, which increases the risk of casualties and can also result in enormous economic losses. Therefore, it is necessary to quickly and accurately extinguish the fire before all battery modules included in the battery rack or electric power storage device are burned or damaged.

Up to now, various technologies have been proposed to extinguish fires in devices including a battery module, such as an electric power storage device. However, effective fire suppression technology has not yet been developed, and particularly, fires occurring in a lithium ion battery included in a battery module is not easily extinguished with a general fire extinguishing agent, and in situations where a plurality of battery modules are densely packed, it is difficult to selectively extinguish fires only in the battery module where the fire occurred, which remains as challenges. Therefore, a method that can effectively prevent a battery cell in which a high temperature phenomenon has occurred from spreading into a large fire by isolating it from other cells early is required.

### [Disclosure]

### [Technical Problem]

The problem that the present invention seeks to solve is to provide a battery module that can effectively extinguish a fire even if a fire occurs in some battery cells and prevent diffusion into a larger fire, and a battery pack including the same.

However, the tasks that embodiments of the present invention seek to solve are not limited to the tasks described above, and can be expanded in various ways within the scope of technical ideas included in the present invention.

### [Technical Solution]

A battery module according to an embodiment includes: a battery cell assembly comprising a plurality of battery cells; a module frame that accommodates the battery cell assembly, and includes a bottom portion; and a phase change material layer in a lower portion of the battery cell assembly, wherein the phase change material layer is configured to melt and erase in a portion corresponding to a battery cell in which a high temperature phenomenon occurs among the plurality of battery cells, and the bottom portion of the battery cell is configured to open where the phase change material layer is erased, causing the battery cell in which the high temperature phenomenon occurs to be discharged to outside of the module frame.

An injection nozzle configured to inject nitrogen gas is injected may be on an upper surface of the module frame.

The battery cell where the high temperature phenomenon occurs may be configured to be pressurized downward and discharged by the nitrogen gas.

The bottom portion may be configured to be ruptured and opened by the battery cell in which the high temperature phenomenon occurs by being pressed downward.

Lubricant may be between the plurality of battery cells.

The battery module may further include at least one spring that is configured to press each of the plurality of battery cells in an upper portion of each of the plurality of battery cell.

After the battery cell where the high temperature phenomenon occurs is discharged, the spring may be configured to fill at least a portion of a space where the battery cell in which the high temperature phenomenon occurs was placed.

The bottom portion may include a plurality of opening/closing portions corresponding to the plurality of battery cells respectively.

Each of the plurality of opening/closing portions may be configured to open due to heat or pressure applied by the battery cell where the high temperature phenomenon occurs.

A battery pack according to an embodiment includes the battery module.

According to the embodiments of the present disclosure, a battery module that can prevent a fire by early separating a battery cell in which a high temperature phenomenon has occurred from other battery cells before a fire occurs, and a battery pack including the same can be provided.

The effects of the present disclosure are not limited to the effects mentioned above, and other effects not mentioned will be clearly understood by a person of an ordinary skill in the art from the description of the scope of the claims.

### [Description of the Drawings]

FIG. 1 is a perspective view of a battery module according to an embodiment.
FIG. 2 is an exploded perspective view of the battery module of FIG. 1.
FIG. 3 shows the cross-section of FIG. 1, taken along the line A-A'.
FIG. 4 illustrates a state of discharging a cell in which a high temperature phenomenon has occurred in FIG. 3.
FIG. 5 illustrates a state of discharging a cell in which a high temperature phenomenon occurs in a battery module according to another embodiment.
FIG. 6 illustrates a state of discharging a cell in which a high temperature phenomenon occurs in a battery module according to still another embodiment.

### [Mode for Invention]

Hereinafter, with reference to the accompanying drawing, various embodiments of the present invention are described in detail and thus a person of ordinary skill in the art to which the present invention belongs can easily practice the invention. The present invention may be implemented in many different forms and is not limited to the embodiments described herein.

In order to clearly explain the present invention, parts that are not related to the description are omitted, and the same reference symbols are used for identical or similar components throughout the specification.

In addition, the size and thickness of each component shown in the drawing are arbitrarily shown for better understanding and ease of description, and thus the present invention is not necessarily limited to what is shown. In the drawings, the thickness of layers, films, panels, regions, and the like are exaggerated for clarity. In addition, in the drawing, the thicknesses of some layers and regions are exaggerated for better understanding and ease of description.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, throughout the specification, the word "on" a target element will be understood to mean positioned above or below the target element, and will not necessarily be understood to mean positioned "at an upper side" based on an opposite to gravity direction.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

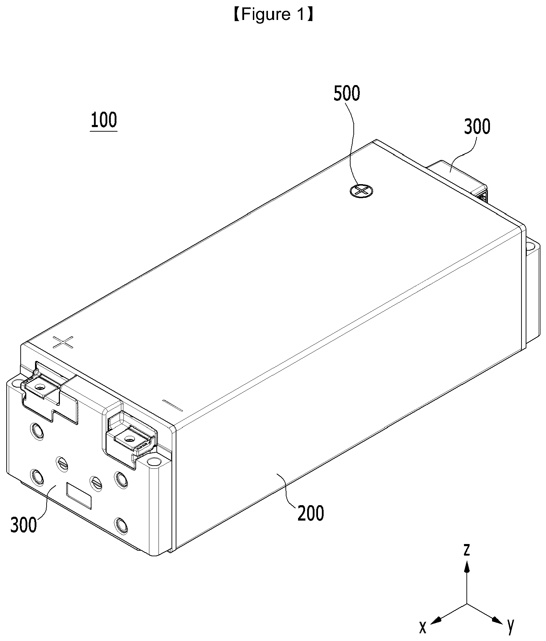

Hereinafter, referring to FIG. 1 to FIG. 4, a battery module according to an embodiment will be described.

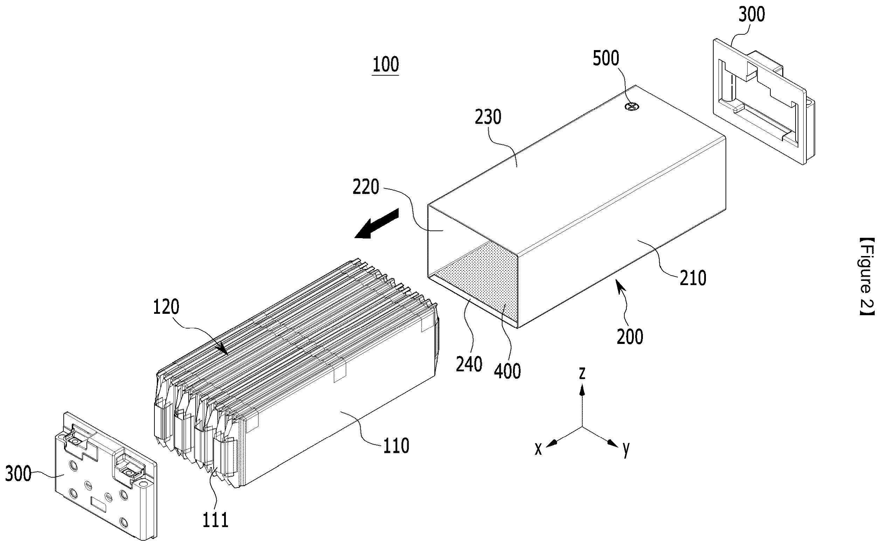

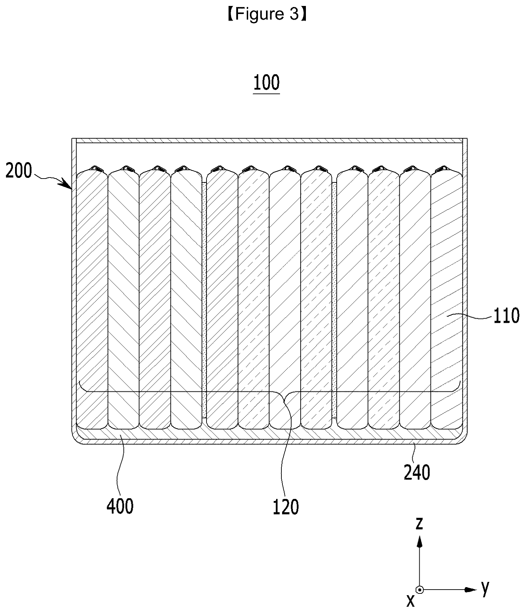

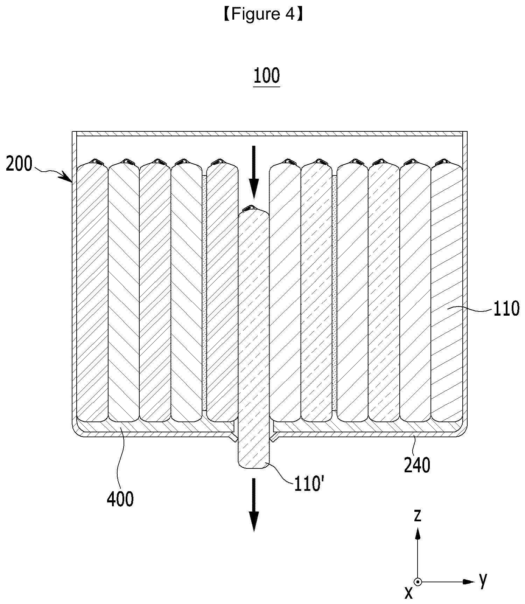

FIG. 1 is a perspective view of a battery module according to an embodiment. FIG. 2 is an exploded perspective view of the battery module of FIG. 1. FIG. 3 shows the cross-section of FIG. 1, taken along the line A-A'. FIG. 4 illustrates a state of discharging a cell in which a high temperature phenomenon has occurred in FIG. 3.

Referring to FIG. 1 to FIG. 3, a battery module 100 according to an embodiment includes a battery cell assembly 120 where a plurality of battery cells 110 are stacked in one direction, and a module frame 200 accommodating the battery cell assembly 120 therein.

First, the battery cell 110 may be a pouch-type battery cell, but is not limited thereto and various types of battery cells may be applied. The plurality of battery cells 110 are stacked so as to be electrically connected to each other to form the battery cell assembly 120. For example, as shown in FIG. 2, the plurality of battery cell 110 may be stacked in a direction that is parallel with the y-axis. Accordingly, electrode leads 111 may be protruded in the x-axis direction and the -x-axis direction, respectively. A busbar frame (not shown) may be disposed on either side of the battery cell assembly 120 in the direction in which the electrode leads protrude. However, this is an exemplary arrangement, and the position of the busbar frame is not limited thereto, and may be arranged to cover other surfaces of the battery cell assembly 120. That is, when the position of the busbar may be electrically connected to the electrode leads 111 according to the protruding direction of the electrode leads 111, the position of the busbar frame may also be appropriately changed and is not particularly limited.

The battery cells 110 are stacked along one direction to form the battery cell assembly 120. Specifically, the battery cells 110 may be stacked along the direction while standing upright with one side of each of the battery cell 110 facing one another.

The module frame 200 according to the present embodiment may include two side surface portions 210 and 220, an upper surface portion 230, and a bottom portion 240 as a member that accommodates the battery cell assembly 120 therein. In addition, one side (x-axis direction) and the other side (-x-axis direction) of the module frame 200 may be open, and the battery cell assembly 120 may be accommodated through the open one side or the other side. The module frame 200 shown in FIG. 2 may be a mono frame in which the two side surface portions 210 and 220, the upper surface portion 230, and the bottom portion 240 are integrated. That is, the module frame 200 may be manufactured by extrusion molding and may have a form in which the two side surface portions 210 and 220, the upper surface portion 230, and the bottom portion 240 are integrally formed. Although not specifically shown, as another embodiment of the present invention, a module frame in the form of a U-shaped frame and an upper plate welded to each other, or an inverted U-shaped frame and a lower plate welded to each other is also possible, and various forms of frames may be applied without particular limitation. When the module frame 200 and the battery cells 110 are stacked, the battery cells 110 may be stacked from one side surface portion 210 to the other side surface portion 220 such that one side of the battery cells 110 is parallel to one side of the side surface portions 210 and 220 of the module frame 200.

Meanwhile, the battery module 100 according to the present embodiment may further include end plates 300 disposed respectively on one open side and the other open side of the module frame 200. The end plates 300 may be disposed to cover the battery cell assembly 120 on one open side and the other open side of the module frame 200. Corners of each end plate 300 may be joined to the corresponding corners of the module frame 200 by welding. The end plates 300 may include a metal material having a predetermined strength and may protect the battery cell assembly 120 and other electrical components from external impact.

The battery module 100 may further include a phase change material layer 400 disposed between the battery cell assembly 120 and the bottom portion 240 of the module frame 200. The phase change material layer 400 may include a phase change material (PCM). The phase change material is a material that repeatedly exhibits the characteristics of heat storage and heat generation by absorbing heat when the surrounding temperature rises and releasing heat by being crystallized when the surrounding temperature drops. In the normal state of battery cell 110, the phase change material absorbs heat from the battery cell 110, thereby obtaining a cooling effect. In addition, the phase change material included in the phase change material layer 400 may have a characteristic in that it melts at a high temperature close to a specific temperature, particularly the ignition temperature of the battery cell 110, and thus a portion supporting the battery cell 110 where the high temperature phenomenon occurs is eliminated. As such phase change materials, paraffin, various salt hydrates, polyethylene glycol (PSG), and the like may be used. In addition, the phase change material layer 400 may contain the phase change material alone, and may also be used by being mixed with various materials for ease of handling during the process and the like, and is not particularly limited.

As described above, when a high temperature phenomenon occurs in some of the battery cells among the plurality of battery cells 110, the phase change material layer 400 may melt by absorbing the heat generated in the battery cells and be eliminated due to depression. That is, as shown in FIG. 4, a portion corresponding to a battery cell 110' in which a high temperature phenomenon has occurred is melted and erased, and then the bottom portion 240 of the corresponding portion is opened, thereby allowing the battery cell 110' in which the high temperature phenomenon has occurred to be discharged to the outside. A process of the battery cell 110' in which the high temperature phenomenon has occurred being discharged to the outside may be accomplished by falling downwards due to gravity or by the pressure of venting gas generated from the battery cell 110' in which the high temperature phenomenon has occurred. In this case, the bottom portion 240 of the phase change material layer 400 may be opened by being broken by high temperature and pressure.

Alternatively, in addition, it is possible to artificially discharge the battery cell 110' where the high temperature phenomenon occurs before ignition is completely achieved. For this purpose, an injection nozzle 500 for injecting nitrogen may be further included in the upper surface portion 230 of the module frame 200. The injection nozzle 500 is connected to a nitrogen storage container (not shown) separately provided on the outside of the battery module 100, and is opened when a specific temperature is reached to inject nitrogen into the battery module 100, thereby increasing the pressure inside the battery module 100. Accordingly, the battery cell 110 can be pressurized from above, and in this process, the battery cell 110' in which the high temperature phenomenon occurred can be discharged by pushing down only the battery cell 110' in which the high temperature phenomenon occurred, since the phase change material layer 400 underneath it is eliminated by the high temperature and pressurization. Therefore, the battery cell 110' in which the high temperature phenomenon occurred can be discharged before ignition occurs to thereby prevent ignition.

Meanwhile, when discharging the battery cell 110' in which the high temperature phenomenon has occurred, lubricant may be applied between the battery cells 110 to ensure smooth discharge. Then, the frictional force between neighboring battery cells 110 is reduced, and the effect of more quickly discharging to the outside when discharging the battery cell 110' in which the high temperature phenomenon has occurred can be obtained.

As described above, according to an embodiment, when a high-temperature phenomenon occurs in a battery cell 110' including a phase change material layer 400 at the bottom of a battery cell assembly 120, the phase change material layer 400 melts and is eliminated, thereby allowing the battery cell 110' in which the high-temperature phenomenon occurs to be quickly discharged to the outside (bottom), and accordingly the battery cell 110' in which the high-temperature phenomenon occurs can be isolated from other battery cells 110 and the diffusion of fire and the occurrence of fire can be prevented, thereby improving the safety of the battery module 100. Meanwhile, in the present embodiment, a case in which the battery cell assembly 120 is accommodated in the module frame 200 and discharged outside the module frame 200 is described as an example, but it is not limited thereto, and any structure in which the plurality of battery cells 110 are arranged is applicable.

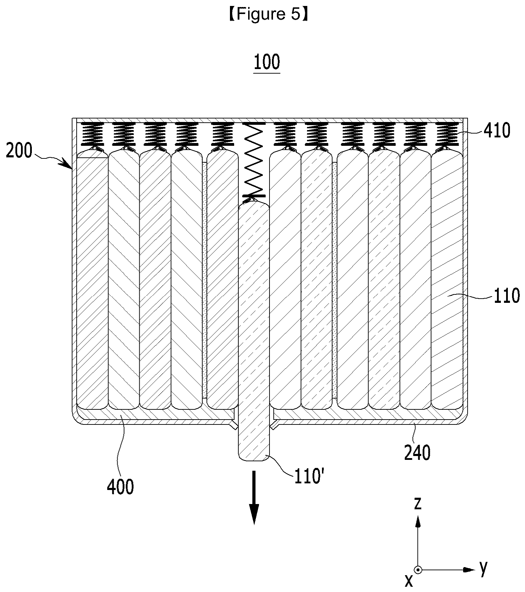

Hereinafter, a battery module according to another embodiment will be described further referring to FIG. 5.

FIG. 5 illustrates a state of discharging a cell in which a high temperature phenomenon occurs in a battery module according to another embodiment.

Referring to FIG. 5, in a battery module 100 according to another embodiment, at least one spring 410 that presses a plurality of battery cells 110 downward may be provided in an upper portion of each of the plurality of battery cells 110. For example, the spring 410 may be provided in plurality of along a length direction (x-axis direction of the battery cell 110. Due to the elasticity of the spring 410, the battery cell 110 may be pressed downward. In this case, as shown in FIG. 5, when a high temperature phenomenon occurs in the battery cell 110', the battery cell 110' in which the high temperature phenomenon occurs can be pressurized and discharged more quickly downward because it is pressurized by the spring 410. That is, it is possible to effectively pressurize and discharge the battery cell 110' in which the high temperature phenomenon has occurred without nitrogen injection through an injection nozzle 500, or together with nitrogen injection.

In addition, as shown in FIG. 5, after the battery cell 110' in which the high temperature phenomenon occurred is discharged, the spring 410, which has lost its elasticity, is placed in an empty space where the battery cell 110' in which the high temperature phenomenon occurred was discharged, and thus the spring 410 can fill at least a part of a space where the battery cell 110' in which the high temperature phenomenon occurred was placed. This allows the remaining battery cells 110 to maintain a stacked structure.

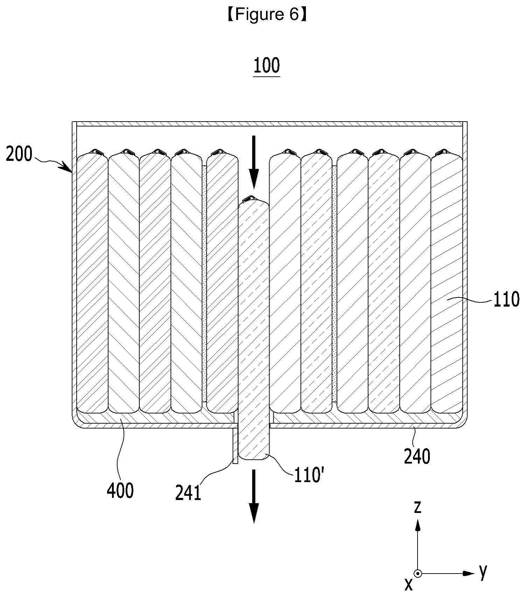

Hereinafter, further referring to FIG. 6, a battery module according to still another embodiment according to the present invention will be described.

FIG. 6 illustrates a state of discharging a cell in which a high temperature phenomenon occurs in a battery module according to still another embodiment.

Referring to FIG. 6, a battery module 100 according to still another embodiment according to the present invention includes a plurality of opening/closing portions 241 respectively corresponding to a plurality of battery cells 110 in a bottom portion 240. The opening/closing portion 241 may be configured to be closed in a normal state, but to open only when an abnormal situation occurs and a certain level of heat or pressure is produced and applied. This configuration may be implemented in various ways. For example, a configuration in which a portion supporting the opening/closing part 241 is fixed by a phase change material layer 400 in a normal state and when the phase change material layer 400 is erased, the portion supporting the opening/closing portion 241 is erased together and opened is also possible. Alternatively, it is possible to configure a bonding portion between the open the opening/closing portions 241 to have a lower melting point or a smaller thickness than other portions to allow it to fuse first at a high temperature. By providing a separately set opening/closing portion 241 in such a way, a battery cell 110' in which a high temperature phenomenon has occurred can be discharged to the outside more quickly.

In the present embodiment, terms indicating direction such as front, back, left, right, up, and down are used, but these terms are only for better understanding and ease of description and may vary depending on positions of a target object or positions of an observer.

One or more battery modules according to the present embodiment described above may be mounted together with various control and protection systems such as a battery management system (BMS), a battery disconnect unit (BDU), and a cooling system to form a battery pack.

The battery module or battery pack may be applied to various devices. Specifically, it may be applied to means of transportation such as electric bicycles, electric vehicles, hybrids, and the like, or an energy storage system (ESS), but is not limited thereto, and may be applied to various devices that can use a rechargeable battery.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

### [Description of Symbols]

- 100:: battery module
- 110:: battery cell
- 120:: battery cell assembly
- 200:: module frame
- 240:: bottom portion
- 241:: opening/closing portion
- 300:: end plate
- 400:: phase change material layer
- 410:: spring
- 500:: injection nozzle

## Claims

1. A battery module comprising:
a battery cell assembly comprising a plurality of battery cells;
a module frame that accommodates the battery cell assembly, and includes a bottom portion; and
a phase change material layer in a lower portion of the battery cell assembly,
wherein the phase change material layer is configured to melt and erase in a portion corresponding to a battery cell in which a high temperature phenomenon occurs among the plurality of battery cells, and
the bottom portion of the battery cell is configured to open in the portion where the phase change material layer is erased, causing the battery cell in which the high temperature phenomenon occurs to be discharged to outside of the module frame.

2. The battery module of claim 1, further comprising:
an injection nozzle configured to inject nitrogen gas is on an upper surface of the module frame.

3. The battery module of claim 2, wherein:
the battery cell where the high temperature phenomenon occurs is configured to be pressurized downward and discharged by the nitrogen gas.

4. The battery module of claim 3, wherein:
the bottom portion is configured to be ruptured and opened by the battery cell in which the high temperature phenomenon occurs by being pressed downward.

5. The battery module of claim 1, further comprising:
lubricant between the plurality of battery cells.

6. The battery module of claim 1, further comprising at least one spring that is configured to press each of the plurality of battery cells in an upper portion of each of the plurality of battery cell.

7. The battery module of claim 6, wherein:
after the battery cell where the high temperature phenomenon occurs is discharged, the spring is configured to fill at least a portion of a space where the battery cell in which the high temperature phenomenon occurs was placed.

8. The battery module of claim 1, wherein:
the bottom portion includes a plurality of opening/closing portions corresponding to the plurality of battery cells, respectively.

9. The battery module of claim 8, wherein:
each of the plurality of opening/closing portions is configured to be opened due to heat or pressure applied by the battery cell where the high temperature phenomenon occurs.

10. A battery pack comprising the battery module of claim 1.
